# EUROPÄISCHE PATENTSCHRIFT

(11) **EP 2 623 284 B1**
(45) Veröffentlichungstag und Bekanntmachung des Hinweises auf die Patenterteilung: **12.04.2017**
(21) Anmeldenummer: 12153486.1
(22) Anmeldetag: 01.02.2012
(51) Int. Cl.: B29B 13/02, B29K 105/00, B29K 101/12, B29L 23/00

(54) **Verfahren und Vorrichtung zur Aufheizung eines Endabschnitts eines Kunststoffrohres**
Method and device for heating an end section of a plastic tube
Procédé et dispositif de chauffage d'une section terminale d'un tuyau en matière synthétique

(43) Veröffentlichungstag der Anmeldung: 07.08.2013
(73) Patentinhaber: Lüers Maschinen- und Stahlbau GmbH, 49424 Lutten-Goldenstedt (DE)
(72) Erfinder: Lüers, Gregor, 49424 Lutten (DE)
(74) Vertreter: Meyer, Ludgerus

(56) Entgegenhaltungen:
- EP-B1- 1 315 604
- DE-A1- 2 536 306
- DE-A1- 3 045 374

## Beschreibung

Die Erfindung betrifft ein Verfahren zur Aufheizung eines Endabschnitts eines Kunststoffrohres nach dem Oberbegriff des Anspruchs 1 sowie eine Einrichtung zur Durchführung eines entsprechenden Verfahrens.

Im Endlosverfahren hergestellte Kunststoffrohre werden zur Lagerung, zum Transport und zur Verwendung in der Regel in bestimmte Längen geteilt. Insbesondere in der Kanalisationstechnik gibt es eine Vielzahl von unterschiedlichen Rohrlängen, die an einer Baustelle in geeigneter Weise zu Rohrsträngen zusammengesteckt werden. Ein Ende eines Rohres ist dabei mit einer Muffe versehen, in die das Spitzende eines weiteren Rohres einsteckbar ist.

Zur Herstellung einer Muffe an einem Rohr wird das entsprechende Ende des Rohres in der Regel zunächst bis auf die Verformungstemperatur aufgeheizt und dann mittels eines Formwerkzeugs die Muffe ausgeformt.

Zur Aufheizung des Endabschnitts eines Kunststoffrohres bis auf die Verformungstemperatur ist es bekannt, den Endabschnitt außenseitig mittels äußerer Heizbacken zu kontaktieren und die Innenseite des Endabschnitts durch einen Heizdorn kontaktlos aufzuheizen. Zum Ausgleich von Fertigungstoleranzen ist in der Regel ein Spalt zwischen Heizdorn und Rohrinnenwandung vorhanden. Die Wärmeübertragung erfolgt hierbei über Strahlungswärme. Bekannt ist es auch, die Rohrinnenseite durch Heißluft aufzuheizen.

Aus der DE 25 36 306 B2 ist es bekannt, die Aufheizung der Endabschnitte eines Rohres mittels eines Infrarotstrahlers vorzunehmen, der während der Aufheizung über einen Luftstrom gekühlt wird. Eine ähnliche Ausbildung findet sich in der EP 1 315 604 B1, bei der mehrere Strahlungsheizkörper exzentrisch auf einem um die Rohrachse rotierend antreibbaren Träger angeordnet sind und ihnen zugeordnete Gasdüsen die Innenseite des Kunststoffrohres an der Stelle der größten Wärmestrahlung abkühlen. Die Abkühlung ist notwendig, weil zur Verkürzung der Aufheizzeit einerseits ein hoher Energieeintrag in das Rohrinnere erforderlich ist, aber andererseits eine Strahlungsheizung ohne Kühlung des Rohrinneren zu übermäßigen Oberflächentemperaturen führen würde. Anstelle eines Strahlungsheizkörpers sind auch Kontaktheizkörper bekannt, die als Spreizdorne ausgebildet sind, die jedoch aufwendig herzustellen und zu betreiben sind.

Aus der DE-A-30 45 374 A1 ist eine Vorrichtung zum manuellen Herstellen von Steckmuffen an Kunststoffrohren bekannt, bei der ein Kunststoffrohr (1) in ein Gehäuse (3) eingeschoben und über eine Klemmvorrichtung (2) festgeklemmt wird. Dann erfolgt eine außenseitige Aufheizung des Kunststoffrohres, entweder durch ein Heißluftgebläse oder durch Infrarotstrahlung im geheizten Gehäuse. Nach der Aufheizung des Rohres wird ein vorher zusammengebauter Aufweitdorn auf eine Spindel aufgesteckt und mit einer Kurbel in das nun plastische Kunststoffrohr eingeführt und solange in das Kunststoffrohr eingedreht, bis seine Aufweitsegmente die Dichtungsnut an der Muffe geformt haben.

Dieser Gegenstand betrifft nur die Ausformung einer Muffe an einem Kunststoffrohr, nachdem eine Aufheizung des Rohres auf die Erweichungstemperatur stattgefunden hat.

Ein weiteres Problem bei der Aufheizung von Kunststoffrohren liegt darin, dass an der Schnittkante eines Rohres, insbesondere wenn dieses aus stark schrumpfenden Kunststoffen, wie z. B. Polypropylen, Polyethylen oder PVC, hergestellt ist, eine gewisse Schrumpfung im Durchmesser vorhanden ist. Wenn der Endabschnitt eines Rohres über äußere Heizbacken in Kontakt mit dem Rohr aufgeheizt wird, fehlt aufgrund der Schrumpfung des Endbereichs des Rohres dort ein unmittelbarer Kontakt, so dass auf der Außenseite im Endbereich des Rohres keine genügende Aufheizung auftritt. Das führt dazu, dass bei der anschließenden Herstellung der Muffe am Ende des Rohres die Maßhaltigkeit beeinträchtigt werden kann. Wenn ein in die Muffe einzusteckendes Spitzende eines weiteren Rohres mit maximalem Durchmesser eingesteckt werden soll, muss auf einer Baustelle häufig ein solches Rohr daher als nicht passend verworfen werden.

Auch kann eine Lagerung bei erhöhter Temperatur zur Schrumpfung im Endbereich des Rohres vor einer Sicke führen, und das Rohr schwer steckbar machen.

Der Erfindung liegt daher die Aufgabe zugrunde, ein Verfahren zur Aufheizung eines Endabschnitts eines Kunststoffrohres zur Vorbereitung der Ausbildung einer Muffe anzugeben, bei dem eine vollständige Aufheizung des Endabschnitts des Rohres bis zur Schnittkante möglich ist. Des Weiteren liegt der Erfindung die Aufgabe zugrunde, eine Vorrichtung zur Durchführung eines entsprechenden Verfahrens anzugeben.

Diese Aufgabe wird durch die in den Ansprüchen 1 und 5 angegebene Erfindung gelöst. Vorteilhafte Weiterbildungen der Erfindung sind in Unteransprüchen angegeben.

Beim Gegenstand der Erfindung erfolgt die Aufheizung des Endabschnitts eines Kunststoffrohres zur Vorbereitung der Ausbildung einer Muffe dadurch, dass der Endabschnitt außenseitig mittels Heizbacken in Kontakt gebracht und innenseitig mittels eines vom Ende in das Kunststoffrohr einführbaren Heizdorns auf ober über die Verformungstemperatur des Kunststoffrohes aufgeheizt wird.

Erfindungsgemäß wird bei diesem Verfahren ein Heizdorn verwendet, dessen Durchmesser entlang eines ersten vorderen Längenabschnitts geringfügig kleiner als der Innendurchmesser des Endabschnitts des Rohres gewählt ist, wobei der Durchmesser des Heizdorns sich über einen an den ersten Längenabschnitt anschließenden zweiten Längenabschnitt aber derart vergrößert, dass das Ende des zweiten Längenabschnitts beim Aufheizen des Endabschnitts des Rohres in Kontakt mit der Innenseite des Rohres kommt, wodurch das Ende des Endabschnitts des Rohres bei dessen Aufheizung sowohl mit den äußeren Heizbacken als auch dem Heizdorn in Kontakt steht.

Obgleich der Heizdorn über den ersten Längenabschnitt einen kleinen Spalt zur Innenseite des Rohres bildet, verringert sich der Spalt zum Ende des zweiten Längenabschnitts hin derart, dass das rückwärtige Ende des Heizdorns beim Einschieben in das Rohr in Kontakt mit der Innenseite des Rohres treten kann und damit das Rohr soweit aufweiten kann, dass es auch an ihrer Schnittkante in Kontakt mit den äußeren Heizbacken treten kann, so dass eine erforderliche Aufheizung des Rohres bis zur Schnittkante hin erfolgt.

Der Heizdorn ist vorzugsweise als zylindrischer Metallkörper mit einem entlang eines ersten vorderen Längenabschnitts gewählten ersten Durchmesser und einem zweiten Längenabschnitt am Ende des Heizdorns mit einem zweiten Durchmesser ausgebildet, wobei der zweite Durchmesser größer als der erste Durchmesser gewählt ist. Der zweite Längenabschnitt vergrößert sich keilförmig vom ersten Durchmesser zum zweiten Durchmesser am Ende des Heizdorns.

Beim Einschieben eines derartigen Heizdorns in ein Kunststoffrohr verdrängt die endseitige keilförmige Form eine mögliche Einschrumpfung des Kunststoffrohres nach außen, so dass das an der Schnittkante liegende äußere Ende des Kunststoffrohres an der Außenseite in Kontakt mit den äußeren Heizbacken treten kann und damit eine ausreichende Aufheizung des Rohres stattfinden kann. Der erste Längenabschnitt verläuft vorzugsweise bis in den Bereich einer im Rohr während der Aufmuffung auszubildenden Sicke, und der zweite Längenabschnitt entspricht etwa der Länge zwischen der Schnittkante und der vorzusehenden Sickenausbildung.

Die Heiztemperatur für Polypropylen- und Polyethylen-Rohre betragen vorzugsweise 150° - 160° C für die äußeren Heizbacken und 140° - 180° C für die Oberfläche des Heizdorns.

Bei PVC-Rohren betragen die bevorzugten Temperaturen für die äußeren Backen 130° - 150° C und für den Heizdorn 120° - 160° C.

Der Keilwinkel des zweiten Längsabschnitts beträgt etwa 2 - 20°, vorzugsweise 5°.

An den zweiten Längenabschnitt schließt sich vorzugsweise noch ein dritter zylinderförmiger Längenabschnitt an, dessen Durchmesser dem Durchmesser des rückwärtigen Endes des zweiten Längenabschnitts entspricht.

Der zylindrische Heizdorn besteht insbesondere aus Vollaluminium oder einer Aluminiumlegierung und enthält eine zentrale Bohrung zur Aufnahme eines zentralen Heizelements, das z. B. als elektrische Heizpatrone ausgebildet sein kann. Anstelle eines zentralen Heizelements kann der Heizdorn auch ringförmig am Umfang angeordnete Bohrungen zur Aufnahme jeweils eines Heizstabes enthalten. Der Heizdorn kann dabei ringförmig ausgebildet sein, so dass dessen Gesamtmasse verringert ist.

Die Erfindung wird nachstehend anhand eines Ausführungsbeispiels näher erläutert. Es zeigen:
- Fig. 1: eine Schnittansicht durch ein Kunststoffrohr mit aufgesetzten Heizbacken sowie eingefahrenem Heizdorn,
- Fig. 2: eine Seitenschnittansicht durch ein Kunststoffrohr mit außenseitigen Heizbacken, wobei der Heizdorn in einer ersten oberen Stellung außerhalb des Rohres und in einer zweiten unteren Stellung im in das Rohr eingeschobenen Zustand dargestellt ist,
- Fig. 2a: die Einzelheit Y von Fig. 2 in vergrößerter Darstellung, wobei die Schrumpfung des Kunststoffrohres an der Schnittkante erkennbar ist, und
- Fig. 2b: die Einzelheit Z von Fig. 2, wobei deutlich wird, dass die keilförmige Aufweitung des Heizdorns zu einer Kontaktierung der Innenseite des Kunststoffrohres führt.

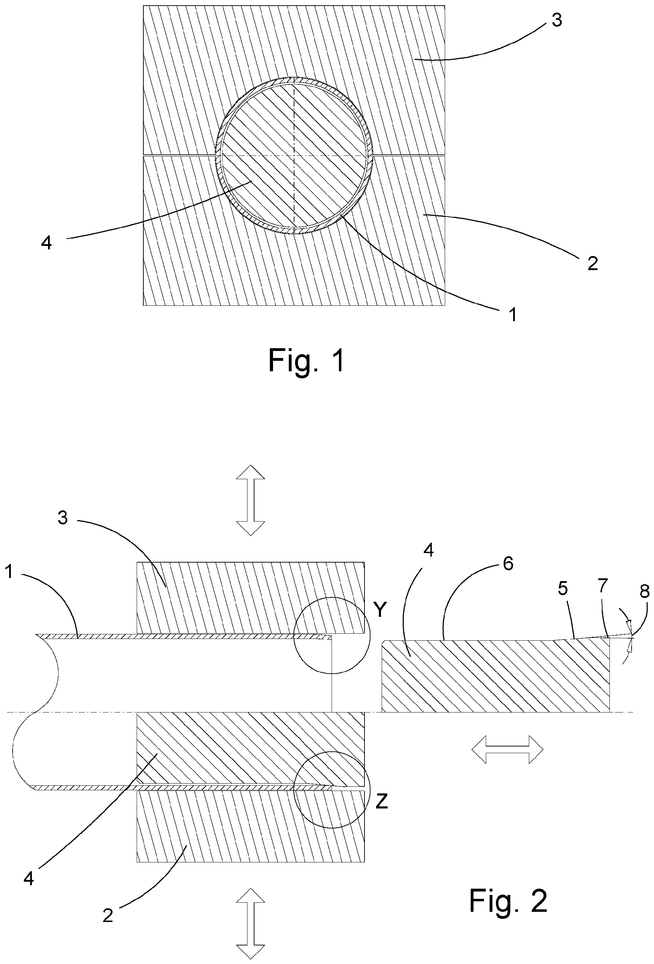

Der in Fig. 1 dargestellte Querschnitt zeigt ein Kunststoffrohr 1, das sich im Spalt zwischen zwei äußeren Heizbacken 2, 3 sowie einem inneren Heizdorn 4 befindet. Der Heizdorn 4 ist als zylindrischer Körper dargestellt, wobei dieser entweder einen zentralen Heizstab oder mehrere ringförmig auf dem Umfang verteilte kleinere Heizstäbe enthalten kann. Im letzteren Fall kann der Heizdorn auch ringförmig ausgebildet sein, um die Gesamtmasse des Heizdorns zu verringern. Das Material des Heizdorns besteht vorzugsweise aus Aluminium oder einer Aluminiumlegierung mit großer Wärmeleitfähigkeit.

Die äußeren schalenförmigen Heizbacken 2, 3 werden in Kontakt mit der Außenseite des Kunststoffrohres 1 gebracht. Bei geschlossenen Heizbacken wird das Rohr derart fixiert, das ein seitliches Wegschieben des Rohres beim Einfahren des Heizdorns, insbesondere wenn die rückwärtige Schräge (zweiter Längenabschnitt 5) das Rohrende auseinanderdrückt, verhindert wird. Der zylindrische Heizdorn 4 weist einen geringen Abstand von 0,5 - 2 mm zur Innenseite des Kunststoffrohres auf, um Fertigungstoleranzen des Kunststoffrohres ausgleichen zu können, so dass beim Ein- und Ausfahren des Heizdorns in und aus dem Kunststoffrohr keine Verklemmung stattfinden kann.

Die Temperatur der äußeren Heizbacke liegt für Polypropylen- und Polyethylen-Rohre bei 150° - 160° C, und die Temperatur des Heizdorns beträgt 140° - 180° C.

Bei Verwendung der Heizeinrichtung für PVC-Rohre liegt die Temperatur der äußeren Heizbacken bei 130° - 150° C und die des Heizdorns bei 120° - 160° C.

Zur Gleitverbesserung des Heizdorns beim Ein- und Ausfahren in das oder aus dem Rohr ist die Oberfläche des Heizdorns harteloxiert, so dass sich eine glatte und harte Oberfläche ergibt.

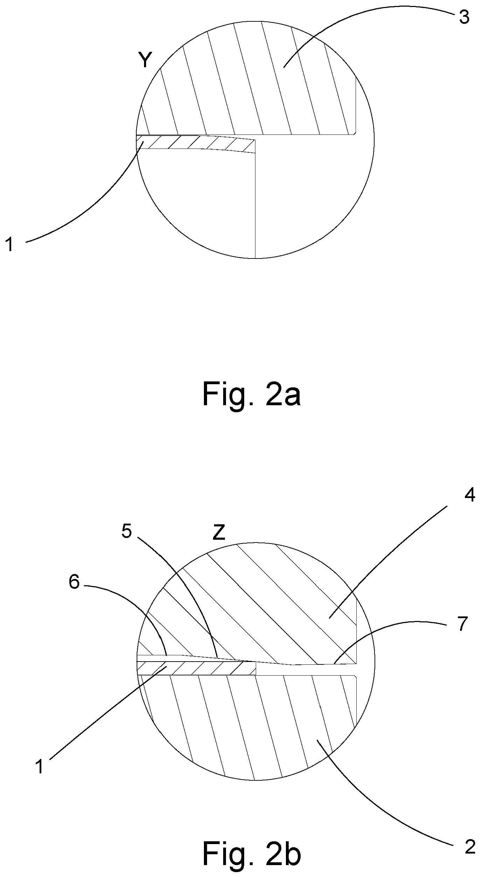

Fig. 2 zeigt die Anordnung in Seitenansicht mit einem Kunststoffrohr 1, auf dessen Außenseite Heizbacken 2, 3 angeordnet sind, die in Kontakt mit dem Kunststoffrohr 1 stehen. In der oberen Hälfte der Fig. 2 ist der Heizdorn 4 außerhalb des Kunststoffrohres dargestellt. Der Heizdorn weist einen vorderen ersten Längenabschnitt 6 und einen rückwärtigen zweiten Längenabschnitt 5 auf. Es ist erkennbar, dass auf dem zweiten rückwärtigen Längenabschnitt 5 eine keilförmige Vergrößerung des Durchmessers vorhanden ist, wobei der Keilwinkel 8 2° - 20° und bevorzugt etwa 5° beträgt. Der vordere Längenabschnitt 6 ist geradzylindrisch ausgebildet. Die Längenabschnitte 6 und 5 gehen stufenlos ineinander über. An den zweiten Längenabschnitt schließt sich noch ein weiterer dritter Längenabschnitt 7 an, der wieder geradzylindrisch ausgebildet ist, so dass der zweite Längenabschnitt 5 einen stufenlosen Übergangsbereich zwischen erstem und drittem Längenabschnitt bildet.

Fig. 2b zeigt die Einzelheit Z von Fig. 2. Es ist dargestellt, wie das Kunststoffrohr 1 an der Schnittkante über die keilförmige Fläche 5 nach außen gedrückt wird und damit im Gegensatz zu Fig. 2a, die die Einzelheit Y von Fig. 2 darstellt, in Kontakt mit der äußeren Heizbacke 2 steht. Aufgrund der kurzen Strecke, über die der Heizdorn 4 eine Verklemmung des Rohres 7 zwischen Heizdorn 4 und äußerer Heizbacke 2 bewirkt, kann die entstandene Klemmkraft mittels ausreichender Zug- und Druckkraft auf den Heizdorn 4 leicht überwunden werden.

Die vordere Kante des Heizdorns 4 am vorderen Ende des Längenabschnitts 6 kann abgeschrägt ausgeführt werden, um zu vermeiden, dass ein übermäßig am Ende geschrumpftes Rohr zu Problemen bei der Einführung des Heizdorns in das Rohr führen kann.

### Bezugszeichen

- 1: Kunststoffrohr
- 2: Heizbacke
- 3: Heizbacke
- 4: Heizdorn
- 5: erster Längenabschnitt
- 6: zweiter Längenabschnitt
- 7: dritter Längenabschnitt
- 8: Keilwinkel

## Patentansprüche

1. Verfahren zur Aufheizung eines Endabschnitts eines Kunststoffrohres (1) zur Vorbereitung der Ausbildung einer Muffe an dem Kunststoffrohr, wobei der Endabschnitt außenseitig mittels äußerer Heizbacken (2, 3) und innenseitig mittels eines vom Ende her in das Kunststoffrohr (1) einführbaren Heizdorns (4) auf oder über die Verformungstemperatur des Kunststoffrohres aufheizbar ist, **dadurch gekennzeichnet, dass** die Aufheizung des inneren Endabschnitts des Kunststoffrohres mittels eines Heizdorns (4) mit wenigstens einem ersten (6) und einem zweiten (5) Längenabschnitt erfolgt, wobei der Durchmesser des Heizdorns (4) entlang dem ersten vorderen Längenabschnitt (6) kleiner als der Innendurchmesser des Endabschnitts des Rohres gewählt ist, dass der Durchmesser des Heizdorns (4) sich über den an den ersten Längenabschnitt (6) anschließenden zweiten Längenabschnitt (5) zum Ende des Heizdorns (4) hin derart vergrößert, dass das Ende des zweiten Längenabschnitts (5) beim Aufheizen des inneren Endabschnitts des Rohres in Kontakt mit der Innenseite des Endabschnitts des Rohres kommt, wodurch das Ende des Endabschnitts des aufzuheizenden Rohres bei dessen Aufheizung sowohl mit den äußeren Heizbacken (2, 3) als auch dem Heizdorn (4) in Kontakt steht.

2. Verfahren nach Anspruch 1, **dadurch gekennzeichnet, dass** bei Verwendung von Polypropylen oder Polyethylen als Rohrmaterial die Heiztemperatur der äußeren Heizbacken (2, 3) 150° - 160° C und die Heiztemperatur des Heizdorns (4) 140° - 180° C beträgt.

3. Verfahren nach Anspruch 1, **dadurch gekennzeichnet, dass** bei Verwendung von PVC als Rohrmaterial die Heiztemperatur der äußeren Heizbacken (2, 3) 130° - 150° C und die Heiztemperatur des Heizdorns (4) 120° - 160° C beträgt.

4. Verfahren nach Anspruch 1, **dadurch gekennzeichnet, dass** die Aufheizung des Endabschnitts des Rohres (1) durch den Heizdorn (4) im Bereich des vorderen ersten Längenabschnitts (6) im Wesentlichen kontaktlos durch Strahlungswärme erfolgt.

5. Vorrichtung zur Durchführung eines Verfahrens zur Aufheizung eines Endabschnitts eines Kunststoffrohres (1) nach Anspruch 1, mit wenigstens zwei äußeren Heizbacken (2, 3) zum Umgreifen und Aufheizen eines äußeren Endabschnitts des Kunststoffrohres und mit einem in den Endabschnitt einführbaren Heizdorn (4) zur Aufheizung der Innenseite des Endabschnitts des Rohres, **dadurch gekennzeichnet, dass** der Heizdorn (4) zur Aufheizung des inneren Endabschnitts des Kunststoffrohres als zylindrischer Metallkörper mit einem entlang einem ersten vorderen Längenabschnitt (6) mit erstem Durchmesser und einem zweiten Längenabschnitt (5) am rückwärtigen Ende des Heizdorns (4) mit einem zweiten Durchmesser ausgebildet ist, wobei der zweite Durchmesser größer als der erste Durchmesser gewählt ist und der zweite Längenabschnitt (5) sich keilförmig vom ersten Durchmesser ausgehend vergrößert.

6. Vorrichtung nach Anspruch 5, **dadurch gekennzeichnet, dass** sich am rückwärtigen Ende des Heizdorns (4) an den zweiten Längenabschnitt (5) ein dritter Längenabschnitt (7) anschließt, dessen Durchmesser dem endseitigen Durchmesser des zweiten Längenabschnitts (5) entspricht.

7. Vorrichtung nach Anspruch 5, **dadurch gekennzeichnet, dass** die Länge des ersten Längenabschnitts (6) etwa der Länge eines Kunststoffrohres vom Muffengrund bis zu einer im Rohr auszubildenden Sicke entspricht.

8. Vorrichtung nach Anspruch 5, **dadurch gekennzeichnet, dass** die Durchmesseränderung des zweiten Längsabschnitts (5) in einem Keilwinkel von 2 - 20° verläuft, wobei die Differenz der Durchmesser zwischen erstem Längenabschnitt (6) und dem Ende des zweiten Längenabschnitts (5) 0,5 - 2 mm beträgt.

9. Vorrichtung nach Anspruch 8, **dadurch gekennzeichnet, dass** der Keilwinkel 5° beträgt.

10. Vorrichtung nach Anspruch 5, **dadurch gekennzeichnet, dass** der zylindrische Metallkörper aus Aluminium oder einer Aluminiumlegierung besteht und eine zentrale Bohrung zur Aufnahme eines zentralen Heizelements enthält.

11. Vorrichtung nach Anspruch 5, **dadurch gekennzeichnet, dass** der zylindrische Metallkörper ringförmig ausgebildet ist und eine Reihe ringförmig am Umfang angeordneter Bohrungen zur Aufnahme jeweils eines Heizstabs enthält.

## Claims

1. A method for heating an end section of a plastic pipe (1) for preparing to form a sleeve on the plastic pipe, wherein the end section can be heated on the exterior by means of external heating jaws (2, 3) and in the interior by means of a heating mandrel (4) that can be inserted into the plastic pipe (1), so that it can be heated to the deformation temperature of the plastic pipe or higher, **characterized in that** the heating of the internal end section of the plastic pipe is accomplished by means of a heating mandrel (4) having at least one first length section (6) and one second length section (5), such that the diameter of the heating mandrel (4) along the first forward length section (6) is selected to be smaller than the internal diameter of the end section of the pipe; **in that** the diameter of the heating mandrel (4) increases over the second length section (5), which is connected to the first length section (6), toward the end of the heating mandrel (4), such that the end of the second length section (5) comes in contact with the interior of the end section of the pipe on heating of the internal end section of the pipe, so that, when heated, the end of the end section of the pipe to be heated comes in contact with the external heating jaws (2, 3) as well as the heating mandrel (4).

2. The method according to claim 1, **characterized in that** when polypropylene or polyethylene is used as the pipe material, the heating temperature of the external heating jaws (2, 3) amounts to 150°-160°C, and the heating temperature of the heating mandrel (4) amounts to 140°-180°C.

3. The method according to claim 1, **characterized in that** when PVC is used as the pipe material, the heating temperature of the external heating jaws (2, 3) amounts to 130°-150°C, and the heating temperature of the heating mandrel (4) amounts to 120°-160°C.

4. The method according to claim 1, **characterized in that** the heating of the end section of the pipe (1) by the heating mandrel (4) in the region of the first forward length section (6) is accomplished essentially by radiant heat in a noncontact process.

5. A device for performing a method for heating an end section of a plastic pipe (1) according to claim 1, having at least two external heating jaws (2, 3) for reaching around and heating an exterior end section of the plastic pipe and having a heating mandrel (4) that can be inserted into the end section for heating the interior of the end section of the pipe, **characterized in that** the heating mandrel (4) is designed for heating the interior end section of the plastic pipe as a cylindrical metal body having a first diameter along a first forward length section (6) and having a second diameter on a second length section (5) on the rear end of the heating mandrel (4), wherein the second diameter is larger than the first diameter and the second length section (5) is enlarged in a wedge shape starting from the first diameter.

6. The device according to claim 5, **characterized in that** a third length section (7), whose diameter corresponds to the end diameter of the second length section (5), is connected to the rear end of the heating mandrel (4) at the second length section (5).

7. The device according to claim 5, **characterized in that** the length of the first length section (6) corresponds approximately to the length of a plastic pipe from the base of the sleeve to a beading to be formed in the pipe.

8. The device according to claim 5, **characterized in that** the change in diameter of the second length section (5) runs at a wedge angle of 2°-20°, such that the difference in diameters between the first length section (6) and the end of the second length section (5) amounts to 0.5 - 2 mm.

9. The device according to claim 8, **characterized in that** the wedge angle amounts to 5°.

10. The device according to claim 5, **characterized in that** the cylindrical metal body is made of aluminum or an aluminum alloy and has a central borehole to receive a central heating element.

11. The device according to claim 5, **characterized in that** the cylindrical metal body is designed in a ring shape and has a row of boreholes arranged in a ring on the circumference, each borehole to receive one heating rod.

## Revendications

1. Procédé pour chauffer une section terminale d'un tuyau en matière plastique (1) afin de préparer la formation d'un manchon sur ledit tuyau en matière plastique, la section terminale étant apte à être chauffée à la température ou au-dessus de la température de déformation du tuyau en matière plastique, côté extérieur à l'aide de mâchoires chauffantes extérieures (2, 3), et côté intérieur à l'aide d'un mandrin chauffant (4) apte à être introduit, de l'extrémité, dans le tuyau en matière plastique (1), **caractérisé en ce que** le chauffage de la section terminale intérieure du tuyau en matière plastique se fait à l'aide d'un manchon chauffant (4) avec au moins une première (6) et une deuxième (5) section longitudinale, le diamètre du mandrin chauffant (4) le long de la première section longitudinale avant (6) étant choisi de manière à être plus petit que le diamètre intérieur de la section terminale du tuyau, **en ce que** le diamètre du mandrin chauffant (4) va en augmentant, sur la deuxième section longitudinale (5) qui fait suite à la première section longitudinale (6), en direction de l'extrémité du mandrin chauffant (4) de telle sorte que l'extrémité de la deuxième section longitudinale (5), lors du chauffage de la section terminale intérieure du tuyau, vient en contact avec le côté intérieur de la section terminale du tuyau, moyennant quoi l'extrémité de ladite section terminale du tuyau à chauffer vient en contact, en chauffant, aussi bien avec les mâchoires chauffantes extérieures (2, 3) qu'avec le mandrin chauffant (4).

2. Procédé selon la revendication 1, **caractérisé en ce que** dans le cas de l'utilisation de polypropylène ou de polyéthylène comme matériau brut, la température de chauffage des mâchoires chauffantes extérieures (2, 3) est de 150-160°C, et la température de chauffage du mandrin chauffant (4) est de 140°-180°C.

3. Procédé selon la revendication 1, **caractérisé en ce que** dans le cas de l'utilisation de PVC comme matériau brut, la température de chauffage des mâchoires chauffantes extérieures (2, 3) est de 130-150°C, et la température de chauffage du mandrin chauffant (4) est de 120°-160°C.

4. Procédé selon la revendication 1, **caractérisé en ce que** le chauffage de la section terminale du tuyau (1) par le mandrin chauffant (4) dans la zone de la première section longitudinale (6) se fait globalement sans contact, par chaleur rayonnante.

5. Dispositif pour la mise en oeuvre d'un procédé pour chauffer une section terminale d'un tuyau en matière plastique (1) selon la revendication 1, avec au moins deux mâchoires chauffantes (2, 3) pour enserrer et chauffer une section terminale extérieure du tuyau en matière plastique, et avec un mandrin chauffant (4) apte être introduit dans la section terminale, pour chauffer le côté intérieur du tuyau, **caractérisé en ce que** le mandrin chauffant (4) pour chauffer la section terminale intérieure du tuyau en matière plastique est conçu comme un corps métallique cylindrique avec une première section longitudinale avant (6) qui présente un premier diamètre, et une deuxième section longitudinale (5), à l'extrémité arrière du mandrin chauffant (4), qui présente un deuxième diamètre, le deuxième diamètre étant choisi pour être plus grand que le premier diamètre, et la deuxième section terminale (5) augmentant en forme de coin à partir du premier diamètre.

6. Dispositif selon la revendication 5, **caractérisé en ce qu'**il est prévu à l'extrémité arrière du mandrin chauffant (4), à la suite de la deuxième section longitudinale (5), une troisième section longitudinale (7) dont le diamètre correspond au diamètre, côté terminal, de la deuxième section longitudinale (5).

7. Dispositif selon la revendication 5, **caractérisé en ce que** la longueur de la première section longitudinale (6) correspond à peu près à la longueur d'un tuyau en matière plastique, du fond de manchon jusqu'à une moulure à former dans le tuyau.

8. Dispositif selon la revendication 5, **caractérisé en ce que** le changement de diamètre de la deuxième section longitudinale (5) définit un angle de coin de 2 à 20°, la différence de diamètre entre la première section longitudinale (6) et l'extrémité de la deuxième section longitudinale (5) étant de 0,5 à 2 mm.

9. Dispositif selon la revendication 8, **caractérisé en ce que** l'angle de coin est de 5°.

10. Dispositif selon la revendication 5, **caractérisé en ce que** le corps métallique se compose d'aluminium ou d'un alliage d'aluminium, et présente un perçage central pour recevoir un élément chauffant central.

11. Dispositif selon la revendication 5, **caractérisé en ce que** le corps métallique cylindrique a une forme annulaire et présente une série de perçages, disposés suivant une forme annulaire sur la circonférence, destinés à recevoir chacun une baguette chauffante.
